# NEUE EUROPÄISCHE PATENTSCHRIFT

(11) **EP 2 504 219 B2**
(45) Veröffentlichungstag und Bekanntmachung des Hinweises auf die Entscheidung über den Einspruch: **21.04.2021**
(45) Hinweis auf die Patenterteilung: 23.07.2014
(21) Anmeldenummer: 10779470.3
(22) Anmeldetag: 06.11.2010
(51) Int. Cl.: B62D 1/184, B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE À MOTEUR

(30) Priorität: 27.11.2009 DE 102009055973
(43) Veröffentlichungstag der Anmeldung: 03.10.2012
(73) Patentinhaber: thyssenkrupp Presta Aktiengesellschaft, 9492 Eschen (LI)
(72) Erfinder: SCHNITZER, Rony, 9491 Ruggell (LI); SULSER, Hansjörg, 9487 Gamprin (LI)
(74) Vertreter: Kilchert, Jochen
(86) Internationale Anmeldenummer: PCT/EP2010/006771
(87) Internationale Veröffentlichungsnummer: WO 2011/063891

(56) Entgegenhaltungen:
- EP-A1- 1 468 895
- EP-A2- 1 464 560
- WO-A1-2008/083811
- DE-A1-102008 054 363
- DE-B3-102005 052 123
- GB-A- 2 451 506
- JP-A- 2005 001 517
- JP-A- 2009 154 789
- KR-A- 20070 075 507
- KR-A- 20090 018 362
- US-B2- 7 219 926

## Beschreibung

Die vorliegende Erfindung betrifft eine Lenksäule gemäß des Oberbegriffs des Patentanspruchs 1.

Eine gattungsgemäße Lenksäule ist in den Fig. 9 bis 12b der JP 2005 001517A gezeigt. Verstellbare Lenksäulen erlauben es, die Position des Lenkrades in Richtung parallel zur Lenkspindellängsachse zu verstellen und/oder eine Höhenverstellung in einer Richtung quer zur Lenkspindellängsachse vorzunehmen. Während der Fahrt ist die Manteleinheit in ihrer Position in der Konsoleneinheit mittels des Feststellmechanismus fixiert. Wird der Feststellmechanismus durch Betätigen des bewegbar gelagerten Feststellelementes in die Freigabestellung gebracht, so kann die Manteleinheit in zumindest einer Richtung parallel und/oder quer zur Lenkspindellängsachse relativ zur fahrzeugfesten Konsoleneinheit und damit die Lage des an der Lenkspindel angebrachten Lenkrades verstellt werden. Bringt man dann das Feststellelement wieder in die Verriegelungsstellung, so ist die Manteleinheit wieder an der Konsoleneinheit festgehalten. Im Normalbetrieb bewegt sich die Manteleinheit in der Verriegelungsstellung des Feststellelementes nicht relativ zur Konsoleneinheit. Anders ist die Situation in dem Fall, in dem das Fahrzeug mit einem anderen Fahrzeug oder Gegenstand kollidiert. In diesem Fall soll das an der Lenkspindel befestigte Lenkrad nicht starr in seiner Position verharren, sondern im Falle eines Aufpralls des Fahrzeuglenkers auf das Lenkrad zurückweichen und z.B. in Richtung zum Motorraum verschoben werden. In vielen Fällen soll bei diesem Zurückweichen die Bewegungsenergie des Fahrers absorbiert werden. Hierfür ist es bei gattungsgemäßen Lenksäulen bekannt, den Feststellmechanismus so auszulegen, dass er eine Verschiebung der Manteleinheit relativ zur Konsoleneinheit auch in der Verriegelungsstellung des Feststellelementes zulässt, wenn im Falle einer Kollision des Fahrzeugs der Fahrzeuglenker auf das Lenkrad geschleudert wird. Ein Vorschlag, wie die durch den Aufprall des Fahrzeuglenkers auf das Lenkrad in die Lenksäule eingebrachte Energie beim Verschieben der Manteleinheit relativ zur Konsoleneinheit absorbiert werden kann, findet sich in der WO 2008/083811 A1. Ziel des dort offenbarten Energieabsorptionssystems ist es letztendlich, die beim Aufprall des Fahrzeuglenkers auf das Lenkrad in die Lenksäule eingebrachte Energie möglichst gleichmäßig und ohne Belastungsspitzen abzubauen, da Belastungsspitzen bzw. ruckartige Energieabsorptionen die Wahrscheinlichkeit von Verletzungen des Fahrzeuglenkers erhöhen.

Eine weitere Problematik ergibt sich in der Freigabestellung des Feststellelementes, wenn der Feststellmechanismus die Manteleinheit in ihrer relativen Lage zur Konsoleneinheit nicht festlegt. In dieser Situation sollte verhindert werden, dass die Manteleinheit in eine Position relativ zur Konsoleneinheit gebracht werden kann, in der sie dann beim Schließen des Feststellmechanismus nicht mehr in der geforderten Art und Weise festgestellt werden kann oder ein funktionsgerechter Gebrauch des Lenksystems durch den Fahrer nicht mehr gewährleistet ist. Um den in der Freigabestellung des Feststellelementes möglichen Verstellbereich zu begrenzen, schlägt die WO 2008/083811 ein Losbrechelement vor, das bei Erreichen des maximal zulässigen Verstellbereichs, die Manteleinheit an einer weiteren Verschiebung hindert. Im Falle einer entsprechend starken Kollision bricht das Losbrechelement jedoch ab und ermöglicht so ein Weiterrutschen der Manteleinheit samt Lenkspindel, sodass entsprechende Energieabsorptionseinrichtungen der Lenksäule in Kraft gesetzt werden können. Nachteil dieser Lösung ist es allerdings, dass das Wegbrechen des Losbrechelementes eine Kraft- bzw. Belastungsspitze ergibt, die den Fahrzeuglenker im Falle einer Kollision unnötig schädigen kann. Diese durch das Wegbrechen des Losbrechelementes entstehende Kraftspitze entsteht im Falle einer Kollision zusätzlich zu einer Kraftspitze beim Übergang von Haftreibung in Gleitreibung, welche sich ergibt, wenn die Manteleinheit in der Verriegelungsstellung des Feststellelementes, also bei geschlossenem Feststellmechanismus, beginnt sich relativ zur Konsoleneinheit zu verschieben.

Es ist Aufgabe der vorliegenden Erfindung, eine gattungsgemäße Lenksäule in einer alternativen Ausgestaltung dahingehend zu verbessern, dass zwar einerseits der in der Freigabestellung des Feststellelementes mögliche Verstellbereich für die Manteleinheit relativ zur Konsoleneinheit beschränkt ist, andererseits aber unnötige Kraftspitzen im Falle einer Kollision möglichst verhindert sind, zumindest jedoch gegenüber dem Stand der Technik verringert sind.

Die vorliegende Erfindung schlägt hierzu eine Lenksäule gemäß Patentanspruch 1 vor.

Auch bei der Erfindung wird das aus der WO 2008/083811 bekannte Losbrechelement durch zumindest einen bewegbar gelagerten Anschlagkörper ersetzt, welcher direkt oder indirekt mit dem Feststellelement zusammenwirkt. Dabei ist vorgesehen, dass der Anschlagkörper in der Freigabestellung des Feststellelementes, in der die Manteleinheit in ihrer Position relativ zur Konsoleneinheit eingestellt werden kann, die Verstellbarkeit der Manteleinheit also den möglichen Verstellbereich begrenzt. In der Verriegelungsstellung des Feststellelementes also in der Normalbetriebsstellung, in der das Fahrzeug auch bewegt wird, ist hingegen vorgesehen, dass der Anschlagkörper in eine Stellung gebracht ist, in der er nicht mit der Manteleinheit in Eingriff steht, also außer Eingriff mit der Manteleinheit angeordnet ist bzw. die Manteleinheit freigibt. Hierdurch wird erreicht, dass im Fall einer Kollision, bei der sich das Feststellelement ja in der Verriegelungsstellung befindet, der Anschlagkörper keinen Einfluss auf das Verschieben der Manteleinheit relativ zur Konsoleneinheit hat. Der Anschlagkörper erzeugt somit im Fall einer Kollision keine zusätzliche Kraftspitze, da er das Verschieben der Manteleinheit relativ zur Konsoleneinheit nicht behindert. Trotzdem sorgt der Anschlagkörper in der Freigabestellung des Feststellelementes, welche in der Regel nur bei stehenden Fahrzeugen gewählt wird, für eine Begrenzung des möglichen Verstellbereiches der Manteleinheit relativ zur Konsoleneinheit, sodass die Manteleinheit in der Freigabestellung nicht in Positionen relativ zur Konsoleneinheit gebracht werden kann, welche vom Hersteller so auch nicht vorgesehen sind.

Die Erfindung umfasst dabei auch den Fall, dass der Anschlagkörper nicht direkt mit der Manteleinheit, sondern mit einem mit der Manteleinheit in die Wirkrichtung, für die die Begrenzung der Bewegung erreicht werden soll, mitbewegten Bauteil zusammenwirkt.

Es ist dabei zu beachten, dass als Konsoleneinheit im Sinne der Erfindung auch eine Zwischeneinheit verstanden werden kann, die in der entsprechenden Verstellrichtung, für die die Anschläge wirken sollen, unverschiebbar, aber in einer anderen Verstellrichtung, beispielsweise einer Verstellung in Höhenrichtung, verstellbar ist. Wenn also im weiteren Text von Konsoleneinheit gesprochen wird, so kann dies stets auch analog für die Zwischeneinheit angewendet werden.

Erfindungsgemäße Anschlagkörper können die Verstellbarkeit der Manteleinheit relativ zur Konsoleneinheit in einer Richtung parallel und/oder quer zur Lenkspindellängsachse begrenzen. Bei der Richtung quer zur Lenkspindellängsachse kann es sich um eine Höhenverstellung, also in Normalbetriebsstellung des Fahrzeuges in vertikaler Richtung handeln. Grundsätzlich ist es aber auch möglich, die Begrenzung der Verstellbarkeit in einer anderen Richtung quer zur Lenkspindellängsachse mittels Anschlagkörper zu begrenzen. Der Begriff quer ist dabei nicht auf orthogonale Winkel eingeschränkt, sondern bedeutet in diesem Zusammenhang insbesondere nicht parallel und nicht co-linear. Die Quer- bzw. Höhenverstellung kann auch durch ein entsprechendes Verschwenken der Manteleinheit relativ zur Konsoleneinheit erfolgen.

Der Feststellmechanismus von erfindungsgemäßen Lenksäulen kann in unterschiedlichen, beim Stand der Technik bekannten Ausgestaltungsformen, realisiert sein. So ist es möglich, dass der Feststellmechanismus so ausgebildet ist, dass die Manteleinheit in der Verriegelungsstellung des Feststellelementes ausschließlich reibschlüssig in oder an der Konsoleneinheit gehalten ist. Es können aber auch bei erfindungsgemäßen Lenksäulen Feststellmechanismen zum Einsatz kommen, welche in der Verriegelungsstellung des Feststellelementes eine formschlüssige oder reib- und formschlüssige Befestigung der Manteleinheit in oder an der Konsoleneinheit vorsehen. Weiters ist darauf hinzuweisen, dass erfindungsgemäße Lenksäulen auch verschiedene Arten von beim Stand der Technik bekannten Energieabsorptionseinrichtungen aufweisen können, welche im Fall einer Kollision für einen, gegebenenfalls zusätzlichen, gezielten Energieabbau sorgen.

Das Feststellelement kann grundsätzlich auch motorisch angetrieben sein, um von der Verriegelungsstellung in die Freigabestellung und wieder zurück gebracht werden zu können. Einfachere und kostengünstigere Varianten sehen jedoch vor, dass das Feststellelement von Hand betätigt werden kann bzw. eine von Hand betätigbare Handhabe aufweist. Diese kann z.B. direkt oder indirekt an der Konsoleneinheit bewegbar gelagert sein. Das Feststellelement kann grundsätzlich verschiebbar und/oder drehbar gelagert sein. Bevorzugte Ausgestaltungsformen sehen vor, dass das Feststellelement ein von Hand betätigbarer, um eine Feststellelementschwenkachse drehbarer oder schwenkbarer Hebel ist, wobei die Achse weiter bevorzugt mit der Achse des Spannbolzens des Feststellmechanismus zusammenfällt.

Bei bevorzugten Ausgestaltungsformen ist vorgesehen, dass die Lenksäule zumindest einen Gegenanschlagkörper, vorzugsweise zumindest zwei Gegenanschlagkörper, aufweist, wobei der Anschlagkörper in der Freigabestellung des Feststellelementes zur Begrenzung der Verstellbarkeit der Manteleinheit relativ zur Konsoleneinheit in zumindest einer der Richtungen parallel und/oder quer zur Lenkspindellängsachse mit dem Gegenanschlagkörper, vorzugsweise mit den Gegenanschlagkörpern, zusammenwirkt. Aktiv wird dieses Zusammenwirken dann in der Regel erst, wenn der Anschlagkörper auf den jeweiligen Gegenanschlagkörper trifft. Der Anschlagkörper kann z.B. direkt oder indirekt in oder an der Konsoleneinheit bewegbar gelagert sein. In diesem Falle ist oder sind dann der oder die Gegenanschlagkörper günstigerweise direkt oder indirekt in oder an der Manteleinheit angeordnet. Um fixe Anschläge zu bilden, ist günstigerweise vorgesehen, dass der Anschlagkörper in seiner Lage, in Richtung der Verstellbarkeit der Manteleinheit relativ zur Konsoleneinheit gesehen, in oder an der Konsoleneinheit fixiert ist und der oder die Gegenanschlagkörper in seiner bzw. ihrer Lage, in Richtung der Verstellbarkeit der Manteleinheit relativ zur Konsoleneinheit gesehen, in oder an der Manteleinheit fixiert ist oder sind. Hierbei ist klarzustellen, dass der Anschlagkörper bzw. der oder die Gegenanschlagkörper, um die Anschlagfunktion bereit zu stellen, nur, in Richtung der Verstellbarkeit der Manteleinheit relativ zur Konsoleneinheit gesehen, fix sein muss bzw. müssen. In anderen Richtungen können sie durchaus bewegbar gelagert sein, so wie dies erfindungsgemäß beim Anschlagkörper auch der Fall ist, um ihn von der ersten Stellung in die zweite Stellung und wieder zurück bringen zu können.

Bevorzugte Ausgestaltungsformen sehen vor, dass der oder die Gegenanschlagkörper eine von Seitenwänden begrenzte und kanalförmige Ausnehmung, vorzugsweise ein Langloch, in Richtung, vorzugsweise in einander entgegen gesetzten Richtungen, der Verstellbarkeit der Manteleinheit relativ zur Konsoleneinheit begrenzt oder begrenzen und der Anschlagkörper in der Freigabestellung des Feststellelementes in die kanalförmige Ausnehmung eingreift. Die kanalförmige Ausnehmung, vorzugsweise das Langloch, kann dabei z.B. direkt oder indirekt in oder an der Manteleinheit angeordnet sein.

Der Anschlagkörper kann durch eine Verschiebebewegung zwischen der ersten und der zweiten Stellung hin und her bewegbar sein. Er kann aber genau so gut auch durch eine Schwenk- bzw. Drehbewegung von der ersten in die zweite Stellung und zurück bringbar ausgebildet sein. Es ist also sowohl eine verschiebbare Lagerung des Anschlagkörpers, als auch eine verdreh- bzw. verschwenkbare Lagerung des Anschlagkörpers möglich. Auch Überlagerungen von Verschwenk- bzw. Verdreh- und Verschiebebewegungen des Anschlagkörpers auf seinem Weg zwischen erster und zweiter Stellung können realisiert werden.

Eine erste Art von Ausgestaltungsvarianten der Erfindung sieht vor, dass der Anschlagkörper zumindest bereichsweise als Stift ausgebildet ist. Insbesondere in dieser Ausgestaltungsform kann der Anschlagkörper vorzugsweise linear verschiebbar direkt oder indirekt, in oder an der Konsoleneinheit gelagert sein. Die Bewegungsrichtung der Verschiebebewegung des Anschlagkörpers kann dabei z.B. orthogonal zur bzw. in einer Ebene normal auf die Lenkspindellängsachse liegen. Im Sinne eines Zusammenwirkens von Feststellelement und Anschlagkörper ist vorgesehen, dass der Anschlagkörper in zumindest einer, vorzugsweise in zwei einander entgegengesetzten, Bewegungsrichtungen des Anschlagkörpers mit dem Feststellelement, vorzugsweise jeweils, über zumindest eine, vorzugsweise an einem mit dem Feststellelement in der Bewegungsrichtung des Feststellelements, mit der das Feststellelement zwischen der Freigabestellung und der Verriegelungsstellung verstellbar ist, gekoppelten Element oder weiter bevorzugt direkt am Feststellelement angeordnete, Steuerfläche geführt ist. Weiters ist vorgesehen, dass der Anschlagkörper in zumindest einer, vorzugsweise in zwei einander entgegengesetzten, Bewegungsrichtung(en) des Anschlagkörpers, vorzugsweise jeweils, über zumindest eine, vorzugsweise zwei, Steuerfläche(n) geführt ist, wobei die Steuerfläche(n) am Feststellelement oder einem mit dem Feststellelement in der Bewegungsrichtung des Feststellelements, mit der das Feststellelement zwischen der Freigabestellung und der Verriegelungsstellung verstellbar ist, gekoppelten Element angeordnet ist (sind). Die Steuerflächen können in diesem Sinne auch als Kulissenbahnen angesehen bzw. bezeichnet werden. Es ist dabei vorgesehen, dass das Feststellelement um eine Feststellelementschwenkachse drehbar gelagert ist und die Steuerfläche oder die Steuerflächen eine die Feststellelementschwenkachse zumindest abschnittsweise spiralförmig umgebende Form aufweist bzw. aufweisen. Im Falle von zwei Steuerflächen können diese eine vorzugsweise kanalartige Nut begrenzen, in die der Anschlagkörper wie in einer Kulissenbahn zwangsgekoppelt mit dem Feststellelement, vorzugsweise permanent, eingreift. Diese Nut kann im oder am Feststellelement angeordnet sein. Im Falle von zwei Steuerflächen ist es möglich, den Anschlagkörper mit einer ersten der Steuerflächen von der ersten in die zweite Stellung zu bringen und mit der zweiten der Steuerflächen wieder zurück von der zweiten in die erste Stellung zu bewegen. Diese Zwangskopplung mit zwei Steuerflächen kann in einer anderen Ausführungsform auch durch eine einzige Steuerfläche ersetzt sein. Für die Rückstellung in die entgegen gesetzte Bewegungsrichtung des Anschlagkörpers kann insbesondere in diesen Fällen dann vorgesehen sein, dass der Anschlagkörper mittels einer Feder gegen die Steuerfläche vorgespannt ist. Insbesondere kann vorgesehen sein, dass der Anschlagkörper mittels einer Feder federbelastet ist, wobei die Federbelastung den Anschlagkörper, vorzugsweise permanent, gegen die Steuerfläche drückt.

Diese Art von Ausgestaltungsformen unter Verwendung von Steuerflächen ist auch anwendbar, wenn der Anschlagkörper linear, verschiebbar gelagert ist. Die genannten Formen der Kopplung bewirken, dass die Bewegung, vorzugsweise Schwenkbewegung, des Feststellelementes zwangsweise in eine Bewegung des Anschlagkörpers umgesetzt wird, die geeignet ist, den Anschlagkörper zwischen einer ersten Stellung, bei der die Bewegung der Manteleinheit nicht begrenzt ist und einer zweiten Stellung, bei der die Bewegung der Manteleinheit begrenzt ist, zu bewegen. Die spiralförmige Ausgestaltungsform der Steuerflächen bezogen auf die Feststellelementschwenkachse kann ähnlich wie ein Gewindegang ausgebildet sein. Sie führt jedenfalls dazu, dass eine Schwenk- bzw. Drehbewegung des Feststellelementes in eine Verschiebebewegung des Anschlagkörpers umgesetzt wird. Die Steigung der Spiralform muss dabei nicht konstant sein, sondern kann auch entlang des spiralförmigen Bereiches variieren.

Im Fall der Anwendung der Erfindung für eine höhen- und längenverstellbare Lenksäule, bei der beispielsweise die Höhenverstellung durch eine Verschwenkung um eine Schwenkachse erfolgt, kann es vorgesehen sein, einen Schwenkhebel einzusetzen, an oder in dem die Manteleinheit in ihrer Länge verschiebbar angeordnet ist und der wiederum zusammen mit der Manteleinheit um eine Schwenkachse in Bezug auf die Konsoleneinheit verschwenkbar angeordnet ist. In derartigen Fällen ist es von Vorteil, im Schwenkhebel eine Abstützung für den Anschlagkörper vorzusehen, wenn der Anschlagkörper die Verstellung in Richtung der Längsspindelachse begrenzen soll.

Im Sinne eines Verfahrens zum Betrieb einer erfindungsgemäßen Lenksäule kann vorgesehen sein, dass in der Freigabestellung des Feststellelementes die Verstellbarkeit der Manteleinheit relativ zur Konsoleneinheit in zumindest einer der Richtungen parallel und/oder quer zur Lenkspindellängsachse von dem Anschlagkörper begrenzt wird und der Anschlagkörper in der Verriegelungsstellung des Feststellelementes außer Eingriff mit der Manteleinheit angeordnet wird.

Weitere Merkmale und Einzelheiten bevorzugter Ausgestaltungsformen der Erfindung ergeben sich aus der nachfolgenden Figurenbeschreibung. Dabei zeigen:
- Fig. 1 bis 9: verschiedene Darstellungen zu einem ersten erfindungsgemäßen Ausführungsbeispiel;
- Fig. 10 u. 11: eine zweite erfindungsgemäße Variante;
- Fig. 12 bis 15: Darstellungen von nicht erfindungsgemäßen Ausführungsformen;
- Fig. 16: Darstellung einer weiteren Ausführungsform der Erfindung.

Die Erfindung wird an Ausführungsbeispielen, bei denen die Klemmung durch ein System bewirkt wird, bei dem der Spannbolzen 21 beim Übergang von der geöffneten in die verriegelte Position in seiner Längsachse verschoben wird. Diese Verschiebung wird in den Ausführungsbeispielen durch ein Nocken/ Nockenfolgersystem erreicht. Derartige Systeme sind allgemein bekannt und werden daher hier nicht weiter erläutert. Alternativ kann auch ein System verwendet werden, bei dem die axiale Verschiebung des Spannbolzens 21 auf andere Weise bewirkt wird, beispielsweise durch ein System mit Wälzkörpern, die auf entsprechenden Bahnen abrollen. Es ist sogar denkbar und möglich, die Erfindung auf Systeme anzuwenden, bei der die eigentliche Fixierung der Manteleinheit 1 gegenüber der Konsoleneinheit 4, auf eine andere Art und Weise bewirkt wird. Entscheidend ist, dass es ein Feststellelement 7 gibt, mit dem der Anschlagkörper 8 in der erfindungsgemässen Art und Weise zusammen wirken kann.

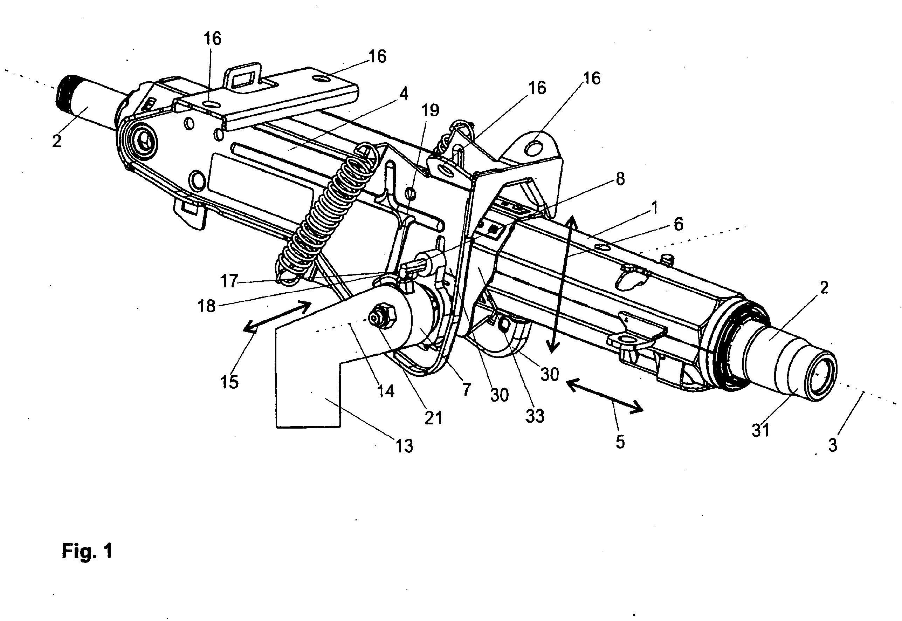

Bei dem ersten erfindungsgemäßen Ausführungsbeispiel zeigt Fig. 1 eine perspektivische Darstellung auf die Lenksäule, wobei sich das Feststellelement 7 in der Verriegelungsstellung befindet, in der die Manteleinheit 1 an der Konsoleneinheit 4 in ihrer Position festgestellt ist. Dies entspricht derjenigen Stellung des Feststellelementes 7, welche im Normalfall gewählt wird, um das Fahrzeug zu fahren. Folglich befindet sich das Feststellelement 7 in der Regel auch in der in Fig. 1 dargestellten Verriegelungsstellung, wenn es zu einer Kollision bzw. einem Crash beim Fahren des Fahrzeuges kommt.

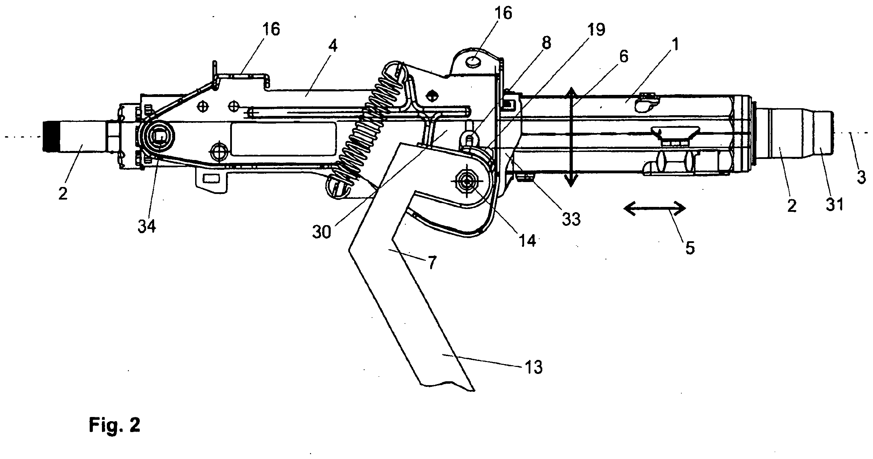

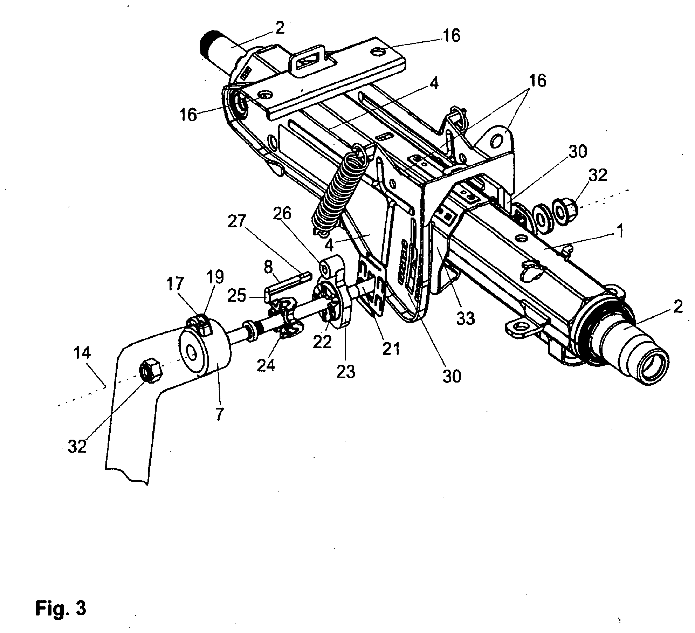

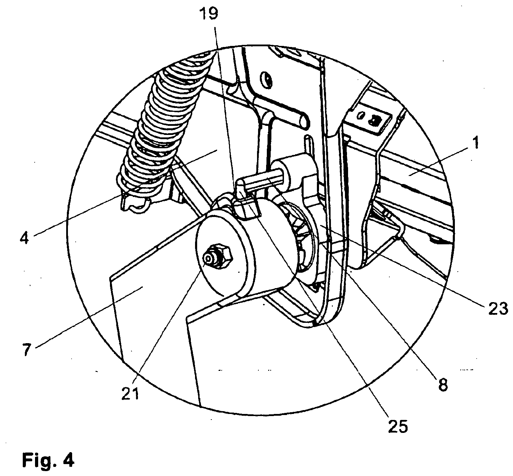

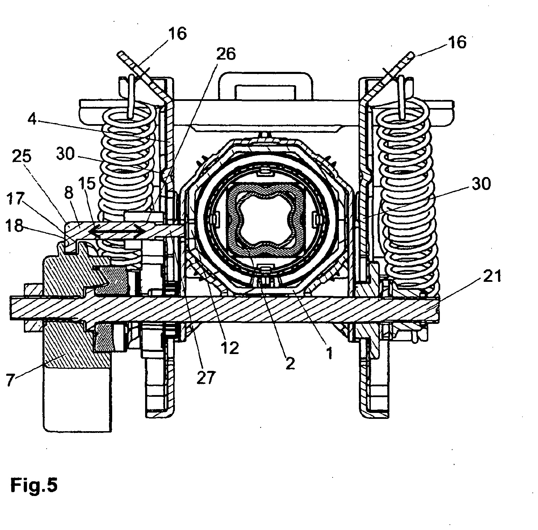

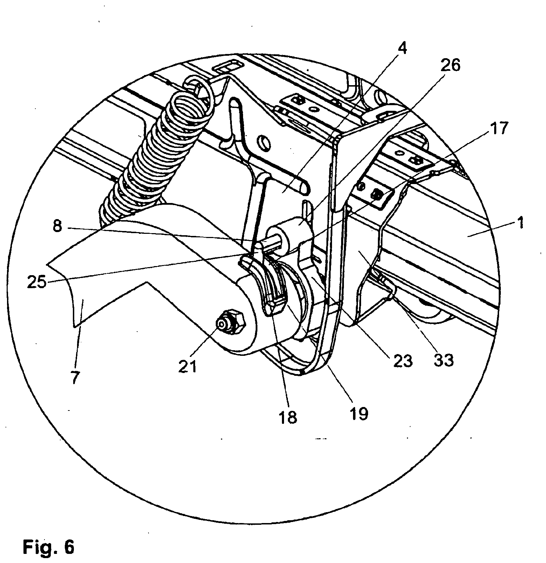

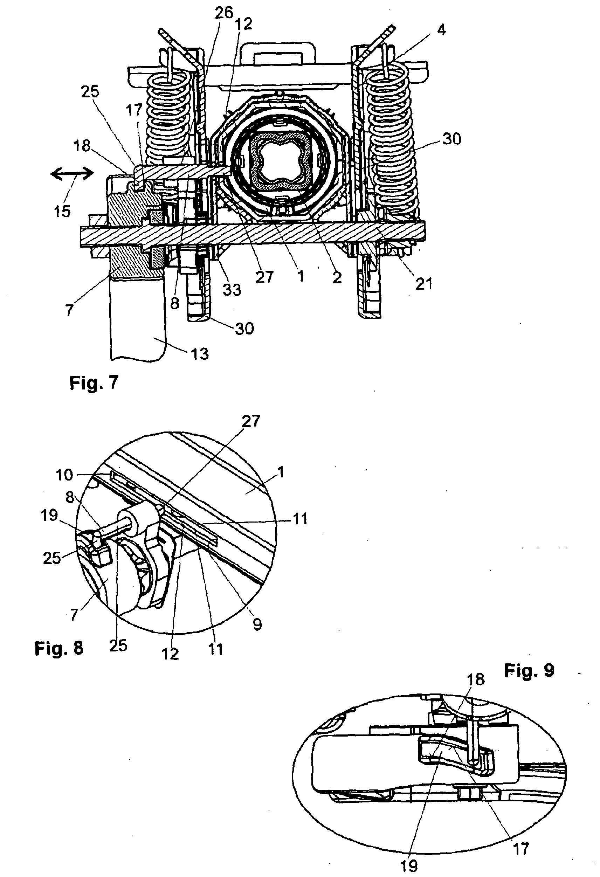

Fig. 2 zeigt die Freigabestellung des Feststellelementes 7 in einer Seitenansicht auf das erste Ausführungsbeispiel einer Lenksäule, in der die Manteleinheit relativ zur Konsoleneinheit verstellt werden kann. Bei dem gezeigten Ausführungsbeispiel ist in dieser Freigabestellung des Feststellelementes 7 sowohl eine Verstellung der Manteleinheit in Richtung 5 parallel zur Lenkspindellängsachse 3, als auch in den Richtungen 6 quer zur Lenkspindellängsachse 3 möglich. Bei der hier realisierten Verstellmöglichkeit quer zur Lenkspindellängsachse 3 handelt es sich um eine Höhenverstellung. Die Höhenverstellung wird ermöglicht, durch einen Schwenkhebel 33, der die Manteleinheit 1 in Längsrichtung der Lenkspindellängsachse 3 verschiebbar führt und um die Schwenkachse 34 in der Konsoleneinheit in Höhenverstellrichtung (=Neigungsverstellung) verschwenkbar bzw. verdrehbar gelagert ist. Auf diese Weise ist die Lenksäule in Längsrichtung 5 und in Höhenrichtung 6 verstellbar ausgeführt. Fig. 3 zeigt das erste Ausführungsbeispiel wiederum in einer perspektivischen Darstellung, wobei allerdings wesentliche Teile des Feststellmechanismus dieser Ausführungsform in einer Explosionsdarstellung gezeigt sind. Fig. 4 zeigt eine Detailansicht des ersten Ausführungsbeispiels auf den erfindungswesentlichen Teil, wobei sich das Feststellelement 7 in der Verriegelungsstellung befindet. Fig. 5 zeigt einen Querschnitt in einer zur Lenkspindellängsachse 3 normalen Ebene, welche durch die Feststellelementschwenkachse 14 verläuft. Auch in Fig. 5 befindet sich das Feststellelement 7 in der Verriegelungsstellung. Die Fig. 6 und 7 zeigen jeweils zu den Fig. 4 und 5 analoge Darstellungen, wobei das Feststellelement 7 jedoch jeweils in der Freigabestellung angeordnet ist, in der die Manteleinheit relativ zur Konsoleneinheit verstellbar ist. Fig. 8 und 9 zeigen noch weitere Detaildarstellungen zu diesem ersten Ausführungsbeispiel. Fig. 8 zeigt eine seitliche Ansicht der Manteleinheit 1 im Bereich der kanalförmigen Ausnehmung 12, welche in den bisher besprochenen Figuren durch die entsprechenden Seitenwangen 30 der Konsoleneinheit 4 verdeckt ist, wobei weitere Elemente der erfindungsgemäßen Lösung in auseinandergezogener Darstellung mit dargestellt sind. Wie in Fig. 8 zu sehen ist, handelt es sich bei der kanalförmigen Ausnehmung 12 im gezeigten Ausführungsbeispiel um ein in der Manteleinheit 1 angeordnetes Langloch, das alternativ auch als längliche Nut ausgebildet sein könnte. Es wird von den Seitenwänden 11 und den Gegenanschlägen 10 und 9 begrenzt. Das Langloch bzw. die kanalförmige Ausnehmung 12 verläuft in diesem Ausführungsbeispiel parallel zur Lenkspindellängsachse 3. Dies muss aber nicht zwingend so sein, auch andere Verläufe sind denkbar und möglich. Darüber hinaus muss es sich bei der kanalförmigen Ausnehmung 12 auch nicht um ein Langloch handeln. Es ist z.B. genau so gut möglich, die Seitenwände 11 und die Gegenanschläge 10 und 9 als Wände auf die Manteleinheit 1 außen aufzusetzen, um so eine kanalförmige Ausnehmung 12 zu schaffen. Unabhängig von der jeweiligen Ausgestaltungsform ist jedenfalls bei diesem Ausführungsbeispiel vorgesehen, dass, wie weiter unten im Detail dargelegt, der Anschlagkörper 8 in die kanalförmige Ausnehmung 12 eingreift und mit den Gegenanschlagkörpern 9 und 10 zur Begrenzung der Verstellbarkeit der Manteleinheit 1 relativ zur Konsoleneinheit 4 zusammenwirkt, wenn sich das Feststellelement 7 in der Freigabestellung befindet. Der Vollständigkeit halber sei darauf hingewiesen, dass die Gegenanschlagkörper 9 und 10 nicht zwingend Teil einer kanalförmigen Ausnehmung 12 sein müssen. Sie können genau so gut als Einzelkörper ausgebildet bzw. vorzugsweise an der Manteleinheit 1 befestigt sein, ohne dass Seitenwände 11 vorhanden sind, welche den Anschlagkörper 8 auf seinem Weg zwischen den Gegenanschlagkörpern 9 und 10 führen.
Fig. 9 zeigt noch eine Detailansicht zum Feststellelement 7. Dargestellt ist eine Draufsicht auf die von den Steuerflächen 17 und 18 begrenzte Nut 19, welche wie weiter unten noch genauer erläutert, mit dem Anschlagkörper 8 zusammenwirken.

Zurückkommend auf Fig. 1 ist zunächst festzuhalten, dass bei diesem Ausführungsbeispiel die Konsoleneinheit 4, welche mittels der Befestigungslaschen 16 am Fahrzeug fixiert wird, zwei Seitenwangen 30 aufweist, zwischen denen die Manteleinheit 1 und der Schwenkhebel 33 der Lenksäule gehalten ist. In der Manteleinheit 1 ist, wie an sich bekannt, die Lenkspindel 2 drehbar um die Lenkspindellängsachse 3 gelagert. Der Feststellmechanismus bei diesem Ausführungsbeispiel beruht im Wesentlichen auf Reibschluss. In der Verriegelungsstellung des Feststellelementes 7 gemäß Fig. 1 werden die Wangen 30 vom Feststellmechanismus so gegen die Manteleinheit 1 gedrückt, dass diese mittels Reibschluss in ihre Position relativ zur Konsoleneinheit 4 festgehalten ist. Dies führt dazu, dass das hier nicht dargestellte aber am, bezogen auf die Fahrtrichtung des Fahrzeuges, hinteren Ende 31 der Lenkspindel 2 angebrachte Lenkrad in seiner Position fixiert ist. Kommt es in dieser Stellung zu einem Crash bzw. zu einer Kollision und wird der Fahrzeuglenker auf das hier nicht dargestellte Lenkrad geschleudert, so wird die Lenkspindel 2 samt Manteleinheit 1 relativ zur Konsoleneinheit 4 in der Art verschoben, dass sich das hinteren Ende 31 der Lenkspindel 2 in Richtung hin zur Konsoleneinheit 4 bewegt. Am Beginn dieser Verschiebung der klemmend in der Konsoleneinheit gehaltenen Manteleinheit ist bei dem gezeigten Ausführungsbeispiel zunächst die Haftreibung zu überwinden. Hierdurch kann eine nicht allzu hohe Belastungsspitze entstehen. Anschließend wird bei dieser Art des Energieabsorptionsmechanismus die durch das Belasten des Lenkrades in die Lenksäule eingebrachte Energie durch die Haftreibung absorbiert, welche beim Verschieben der Manteleinheit 1 relativ zur Konsoleneinheit 4 überwunden werden muss, wenn sich das Feststellelement 7 gemäß Fig. 1 in der Verriegelungsstellung befindet.

Um im geschilderten Kollisionsfall den auf das Lenkrad geschleuderten Fahrzeuglenker nicht noch zusätzlich mit einer Kraft- bzw. Belastungsspitze zu belasten, steht der Anschlagkörper 8 erfindungsgemäß in der Verriegelungsstellung des Feststellelementes 7 nicht im Eingriff mit der Manteleinheit 1, wie dies weiter unten anhand der nachfolgenden Figuren noch im Detail erläutert wird. Zunächst wird aber noch kurz der besonders gut in der Explosionsdarstellung gemäß Fig. 3 erkennbare Feststellmechanismus des gezeigten Ausführungsbeispiels erläutert. Dieser weist neben dem Feststellelement 7 wie an sich bekannt den Spannbolzen 21 auf. Dieser ist im gezeigten Ausführungsbeispiel unterhalb der Manteleinheit 1 durch entsprechende Ausnehmungen in den Seitenwangen 30 der Konsoleneinheit 4 hindurchgeführt. Genau so gut kann der Befestigungsbolzen 21 in anderen Ausgestaltungsformen der Erfindung natürlich aber auch oberhalb der Manteleinheit 1 die Seitenwangen 30 miteinander verbinden. An einem Ende des Befestigungsbolzens 21 ist das hier als von Hand betätigbarer Hebel ausgeführte Feststellelement 7 angeordnet. Zur Handbetätigung weist es die Handhabe 13 auf. Die Muttern 32 werden, wie an sich bekannt, auf den Spannbolzen 21 aufgeschraubt. Das Feststellelement 7 ist im gezeigten Ausführungsbeispiel um die Feststellelementschwenkachse 14 schwenkbar. Es kann vorgesehen sein, dass das Feststellelement ein um eine Feststellelementschwenkachse schwenkbares Element, vorzugsweise ein von Hand betätigbarer Hebel oder ein elektrisch angetriebenes Rotationselement, ist. Um die Manteleinheit 1 zwischen den Seitenwangen 30 der Konsoleneinheit 4 mittels Reibschluss bzw. klemmend feststellen zu können, sitzt auf dem Befestigungsbolzen 21 eine Nockeneinheit 24, welche im fertig montierten Zustand beim Verschwenken des Feststellelementes 7 auf der Nockenfolgerkontur 22 verdreht wird. Im gezeigten Ausführungsbeispiel ist die Nockeneinheit 24 drehfest und damit um die Feststellelementschwenkachse 14 drehbar mit dem Feststellelement 7 verbunden, während die Nockenfolgerkontur 22 mittels eines Konturträgers 23 drehfest an der Konsoleneinheit 4 fixiert ist. Dies hat zur Folge, dass beim Verschwenken des Feststellelementes 7 um die Feststellelementschwenkachse 14 die Nockeneinheit 24 relativ zur Nockenfolgerkontur 22 verdreht wird. Durch die Ausformung von Nockeneinheit 24 und Nockenfolgerkontur 22 kommt es dabei je nach Schwenkrichtung des Feststellelementes 7 zu einem Spannen bzw. Entspannen dieses Feststellmechanismus. In der Verriegelungsstellung des Feststellelementes 7 gemäß Fig. 1 werden die Seitenwangen 30 mittels des Feststellmechanismus so aufeinander zu gepresst, dass sie die Manteleinheit 1 mittels Reibschluss zwischen sich feststellen. In der in Fig. 2 dargestellten Freigabestellung sind die Seitenwangen 30 so weit voneinander entfernt, bzw. nicht aufeinander zugespannt, sodass die Manteleinheit 1 in ihrer Position relativ zur Konsoleneinheit 4 verstellt werden kann.

Neben dem geschilderten Feststellmechanismus sieht man in Fig. 3 auch den erfindungsgemäß vorgesehenen Anschlagkörper 8, welcher in diesem Ausführungsbeispiel zumindest bereichsweise als ein veschiebbarer Stift ausgebildet ist. Dieser ist verschiebbar in dem Führungskanal 26 des Konturträgers 23 und damit an der Konsoleneinheit 4 gelagert. Der Anschlagkörper 8 weist ein Ende 27 auf, mit dem er, wie weiter unten im Detail geschildert, in der Freigabestellung des Feststellelementes 7 die Verstellbarkeit der Manteleinheit 1 relativ zur Konsoleneinheit 4 begrenzt. Am gegenüberliegenden Ende des Anschlagkörpers 8 dieses Ausführungsbeispiels ist ein Eingreifhaken 25 vorgesehen. Über diesen ist der Anschlagkörper 8 dieses Ausführungsbeispiels mit dem Feststellelement 7 zwangsgekoppelt. Konkret ist dabei bei diesem Ausführungsbeispiel vorgesehen, dass der Anschlagkörper 8 in die von den Steuerflächen 17 und 18 begrenzte Nut 19 am Feststellelement 7 permanent eingreift. Der Verlauf der Steuerflächen 17 und 18 ist wie besonders gut in Fig. 9 zu sehen, bezogen auf die Feststellelementschwenkachse 14, in diesem Ausführungsbeispiel spiralförmig ausgebildet. Dies hat zur Folge, dass der zwischen den Steuerflächen 17 und 18 geführte Anschlagkörper 8 bei einem Verschwenken des Feststellelementes 7 um die Feststellelementschwenkachse 14 zwangsweise eine Verschiebebewegung parallel zur Feststellelementschwenkachse 14 ausführt. Im ersten Ausführungsbeispiel sorgt dabei die Steuerfläche 17 dafür, dass der Anschlagkörper 8 bei einem Verschwenken des Feststellelementes 7 von der Freigabestellung gemäß Fig. 2 in die Verriegelungsstellung gemäß Fig. 1 in Richtung hin zum Feststellelement 7 gezogen wird. Durch diese Verschiebebewegung des Anschlagkörpers 8 wird dessen Ende 27, wie besonders gut beim Vergleich der Fig. 5 mit der Fig. 7 zu sehen, aus der kanalförmigen Ausnehmung 12 in der Manteleinheit 1 herausgezogen. Die am Ende dieser Verschiebebewegung vom Anschlagkörper 8 in der Verriegelungsstellung des Feststellelementes 7 erreichte Endstellung, ist besonders gut in Fig. 5 zu sehen. In dieser Stellung steht der Anschlagkörper 8 nicht im Eingriff mit der Manteleinheit 1, sodass diese gemäß der Erfindung im Fall einer Kollision relativ zur Konsoleneinheit 4 verschoben werden kann, ohne dass der Anschlagkörper 8 noch einen Einfluss auf sie hat. Der Energieabbau im Kollisionsfall wird aufgrund dieser Maßnahme durch den Anschlagkörper 8 nicht gestört bzw. nicht mit zusätzlichen unerwünschten Kraftspitzen belastet. Soll die Manteleinheit 1 in einer der Richtungen 5 bzw. 6 relativ zur Konsoleneinheit 4 verstellt werden, so muss hierfür zunächst der Feststellmechanismus gelöst werden. Hierzu wird das Verstellelement 7 um die Verstellelementschwenkachse 14 geschwenkt, bis die in Fig. 2 gezeigte Freigabestellung erreicht wird. Bei dieser Verschwenkbewegung des Feststellelementes 7 schiebt die Steuerfläche 18 zwangsweise den Anschlagkörper 8 mit seinem Ende 27 in die kanalförmige Ausnehmung 12 der Manteleinheit 1 hinein. In der Freigabestellung des Feststellelementes 7 wird dabei die Stellung gemäß Fig. 7 erreicht, in der der Anschlagkörper 8 mit seinem Ende 27 in die kanalförmige Ausnehmung 12 der Manteleinheit 1 eingreift. Die Manteleinheit 1 kann in dieser Stellung so lange gegen die Konsoleneinheit 4 verschoben werden, bis der Anschlagkörper 8 bzw. sein Ende 27 mit einem der in Fig. 8 dargestellten Gegenanschlagkörper 9 oder 10 zusammentrifft, womit die Verstellbarkeit der Manteleinheit 1 relativ zur Konsoleneinheit 4 begrenzt ist.

Günstigerweise sind die Steuerflächen 17, 18 derart ausgebildet, dass beim Wechsel von der Verriegelungsstellung in die Freigabestellung der Anschlagkörper derart verschoben wird, dass er bereits dann in die erste Stellung, bei der er die Verstellung der Manteleinheit begrenzt, verschoben ist, wenn das Haltekraftniveau noch mehr als 50%, bevorzugt mehr als 80%, der Haltekraft in der Verriegelungsstellung zwischen Manteleinheit 1 und Konsoleneinheit 4 beträgt. Damit wird erreicht, dass beim Öffnen des Klemmsystems, auch bei schneller und kraftvoller Verstellbetätigung der Lenksäule durch den Fahrer, die Manteleinheit nicht über den vorgesehenen Bewegungsbereich hinaus verschoben wird. Aufgrund der geometrisch festgelegten Zusammenhänge, kann diese Auslegung einfach durch eine geometrische Festlegung erreicht werden.

In dem bisher geschilderten ersten Ausführungsbeispiel ist der Anschlagkörper 8 somit in beiden seiner möglichen Bewegungsrichtungen 15 mit dem Feststellelement 7 zwangsgekoppelt. Die Steuerfläche 17 zieht den Anschlagkörper aus der kanalförmigen Ausnehmung 12 heraus. Die Steuerfläche 18 schiebt ihn in diese hinein.

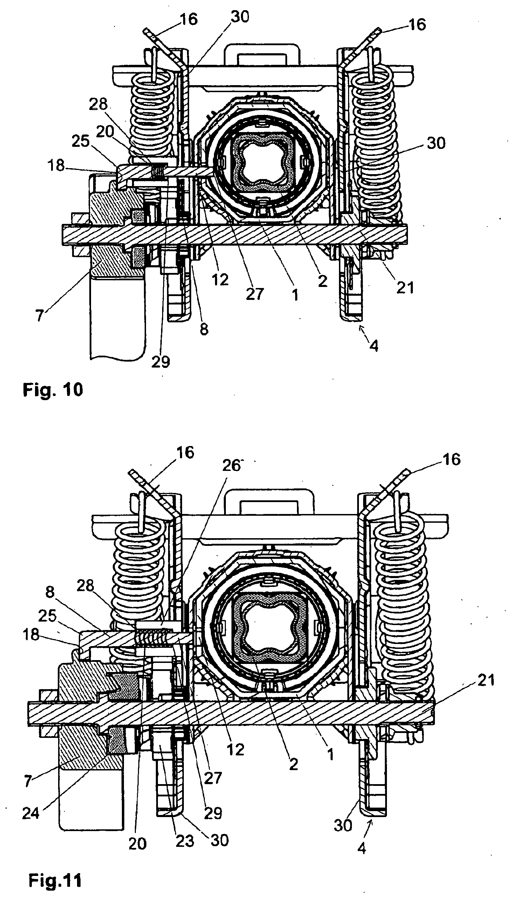

Diese Zwangskopplung in beide Bewegungsrichtungen 15 muss aber nicht zwingend sein. Dies zeigt das zweite Ausführungsbeispiel gemäß der Fig. 10 und 11. Da dieses zweite Ausführungsbeispiel zum Großteil analog zum ersten Ausführungsbeispiel ausgeführt ist, wird im Folgenden im Wesentlichen nur noch auf die Unterschiede zwischen diesen beiden Ausführungsbeispielen eingegangen.

Fig. 10 zeigt die Freigabestellung des Feststellelementes 7 dieses Ausführungsbeispiels, bei der der Anschlagkörper 8 die Verstellbarkeit der Manteleinheit 1 relativ zur Konsoleneinheit 4 durch Eingriff in die kanalförmige Ausnehmung 12 in der Manteleinheit 1 begrenzt. Fig. 11 zeigt die Verriegelungsstellung des Feststellelementes 7, in der der Anschlagkörper 8 in seiner zweiten Stellung angeordnet ist, in der er außer Eingriff mit der Manteleinheit 1 steht. Bei diesem zweiten Ausführungsbeispiel erfolgt das Verschieben des Anschlagkörpers 8 in Richtung hin zur Manteleinheit 1 wie im ersten Ausführungsbeispiel mittels der Steuerfläche 18. Im Unterschied zum ersten Ausführungsbeispiel existiert beim zweiten Ausführungsbeispiel gemäß der Fig. 10 oder 11 aber nicht die Steuerfläche 17. Für die Verschiebung des Anschlagkörpers 8 aus der kanalförmigen Ausnehmung 12 der Manteleinheit 1 heraus in Richtung hin zum Feststellelement 7 ist in dem zweiten Ausführungsbeispiel ein federndes Element, hier im Beispiel die Feder 20, vorgesehen. Die Feder spannt den Anschlagkörper 8 in Richtung der Steuerfläche 18 vor, so dass in allen Verstellpositionen des Feststellelements 7 ein Kontakt zwischen der Steuerfläche 18 und dem Anschlagelement 8 gewährleistet ist. Die Feder 20 liegt im gezeigten Ausführungsbeispiel einerseits an den ersten Stützflächen 28 an, welche am Anschlagkörper 8 fixiert sind. Andererseits liegt die Feder 20 aber auch an den zweiten Stützflächen 29 an, welche im gezeigten Ausführungsbeispiel in den Führungskanal 26 eingearbeitet sind. In der Freigabestellung des Feststellelementes 7 gemäß Fig. 10 ist die Feder 20 komprimiert. Sobald das Feststellelement 7 von der in Fig. 10 gezeigten Stellung in die in Fig. 11 gezeigte Verriegelungsstellung geschwenkt wird, kann die Feder 20 den Anschlagkörper 8 mit seinem Ende 27 aus der kanalförmigen Ausnehmung 12 herausschieben. Dabei wird der Anschlagkörper 8 bzw. sein Eingreifhaken 25 im gezeigten Ausführungsbeispiel permanent gegen, die wie im ersten Ausführungsbeispiel spiralförmig ausgeformte Steuerfläche 18 gedrückt. Am Ende dieser Bewegung wird die Verriegelungsstellung des Feststellelementes 7 gemäß Fig. 11 erreicht, in der der Anschlagkörper 8 nicht mehr in die kanalförmige Ausnehmung 12 eingreift, womit im Kollisionsfall ebenfalls verhindert ist, dass durch den Anschlagkörper 8 eine störende zusätzliche Kraftspitze erzeugt wird.

Alternativ zur Ausbildung eine speziellen Steuerfläche 18 mit einer entsprechenden spiralförmigen Steigung, wie in den Figuren veranschaulicht ist, kann die Steuerfläche 18, in einer nicht zur Erfindung gehörenden Weise, an der zur Manteleinheit hin gerichteten Randfläche des Feststellelements 7, ohne gesonderte Steigung ausgebildet sein. In diesem Falle würde die axiale Verschiebung des Anschlagkörpers 8 durch den Nockenhub des in den Beispielen dargestellten Verriegelungssystems mit Nocken und Nockenfolger, bewirkt werden.

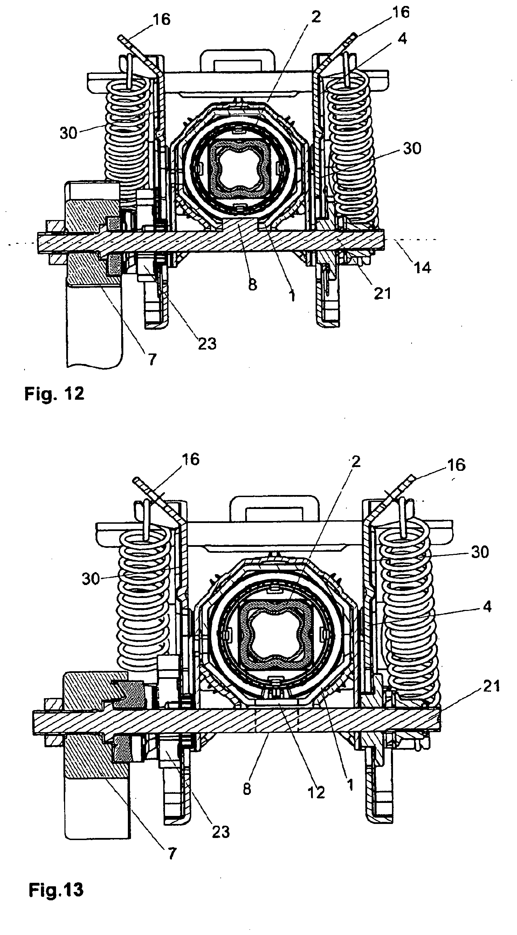

Während in den ersten beiden Ausführungsbeispielen der Anschlagkörper 8 eine Verschiebebewegung in den Bewegungsrichtungen 15 ausführt, ist in den Fig. 12 und 13 vorgesehen, dass der Anschlagkörper 8 Schwenkbewegungen ausführt, wenn das Feststellelement 7 von seiner Freigabestellung in die Verriegelungsstellung bzw. zurückbewegt wird. Die Zwangskopplung zwischen Anschlagkörper 8 und Feststellelement 7 ergibt sich hier über den Spannbolzen 21. Dieser ist gemeinsam mit dem Feststellelement 7 um die Feststellelementschwenkachse 14 schwenk- bzw. drehbar. Durch die Fixierung des Anschlagkörpers 8 am Spannbolzen 21 macht der Anschlagkörper 8 zwangsläufig diese Verschwenkbewegung um die Feststellelementschwenkachse mit.

In den Fig. 12 und 13 ist die kanalförmige Ausnehmung 12 nicht seitlich sondern an der Unterseite der Manteleinheit 1 angeordnet. Ansonsten kann die kanalförmige Ausnehmung 12 aber wie in den vorab besprochenen Ausführungsbeispielen ausgeführt sein. Jedenfalls weist sie auch hier die Gegenanschlagkörper 9 und 10 auf. Der Vollständigkeit halber sei darauf hingewiesen, dass die Manteleinheit 1 aber auch so weit oberhalb des Spannbolzens 21 gelagert sein könnte, dass die Gegenanschlagkörper 9 und 10 nicht Teil einer kanalförmigen Ausnehmung bzw. eines Langlochs in der Manteleinheit 1 sein müssen, sondern auch als separate Körper an der Manteleinheit 1 befestigt oder angeformt sein können.

Fig. 12 zeigt jedenfalls die Freigabestellung des Feststellelements 7, in der der Anschlagkörper 8 in die kanalförmige Ausnehmung 12 in der Manteleinheit 1 eingreift. Dies verhindert, dass die Manteleinheit 1 in der Freigabestellung des Feststellelementes 7 zu weit gegen die Konsoleneinheit 4 verschoben werden kann, da es vorher zum Anschlagen des Anschlagkörpers 8 gegen einen der Gegenanschlagkörper 9 oder 10 kommt.

Fig. 13 zeigt die Verriegelungsstellung des Feststellelementes 7. In dieser Stellung ist der Anschlagkörper 8 nicht im Eingriff mit der Manteleinheit 1. Er ist aus der kanalförmigen Ausnehmung 12 herausgeschwenkt und liegt in der, in Fig. 13 dargestellten Stellung vollständig hinter dem Spannbolzen 21 verborgen. Um dies zu verdeutlichen, ist der Anschlagkörper 8 nur gestrichelt auf dem Spannbolzen 21 dargestellt. Auch hier wird somit in der Verriegelungsstellung des Feststellelementes 7 sichergestellt, dass im Kollisionsfall durch den Anschlagkörper 8 keine zusätzlichen Kraftspitzen bei der Energieabsorption durch Verschieben der Manteleinheit 1 relativ zur Konsoleneinheit 4 entstehen können.

Die verschiedenen Ausführungsbeispiele verdeutlichen, dass die Erfindung in unterschiedlichsten Ausgestaltungsformen ausgebildet werden kann. Es handelt sich jeweils nur um Beispiele, wie die Erfindung realisierbar ist.

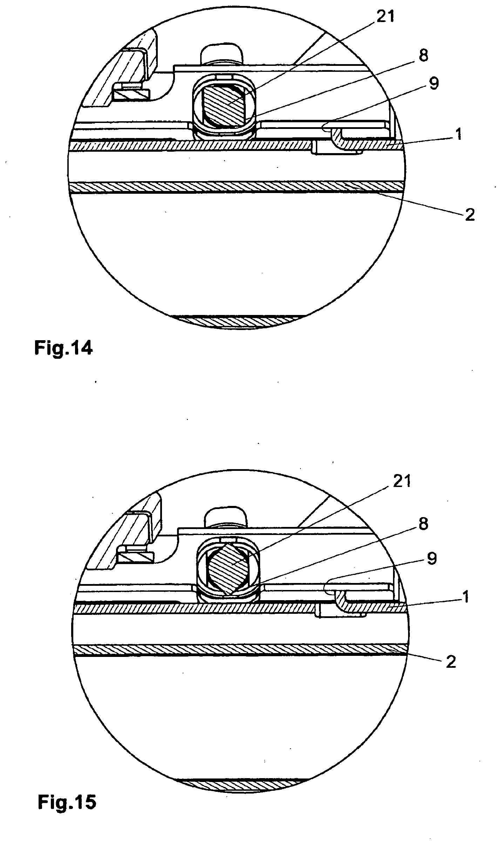

In den Figuren 14 und 15 ist der Anschlagkörper 8 durch eine Kante am Spannbolzen 21, der bewusst zumindest über einen Teil seiner Länge nicht rund sondern unrund ausgebildet ist, angeordnet. Der Gegenanschlagkörper 9 ist in einfacher Weise direkt an der Manteleinheit 1 durch Stanzen und Biegen eines Wandabschnittes gebildet. Es ist dabei darauf zu achten, dass der hochstehende Wandabschnitt, der den Gegenanschlag 9 bildet, so weit herausragt aus der Manteleinheit 1, dass im Falle eines geöffneten Verriegelungssystems, die Begrenzung der Verschiebung durch das Zusammenwirken des Anschlagkörper 8 mit dem Gegenanschlagkörper 9 ermöglicht ist und im Falle des geschlossenen Verriegelungssystems der Anschlagkörper 9 mit Freigang an dem Spannbolzen 21 vorbei geführt werden kann. Ein zweiter Anschlagkörper 10 (hier nicht dargestellt) kann entsprechend ausgebildet sein.

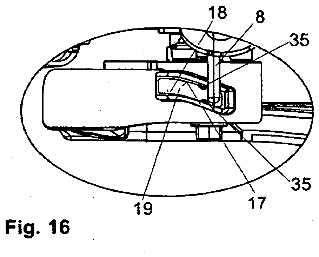

In einer Weiterführung der Erfindung ist es möglich, die Crashsituation noch weiter zu verbessern, indem ein Öffnen des Klemmsystems im Crashfall, wie es beispielsweise durch die Masse-Beschleunigungskraft der Handhabe 13 bewirkt werden könnte, zu hemmen. Hierzu sind in einfacher Weise in die Steuerflächen 17 und 18, Dämpfer 35 eingebracht, die bevorzugt elastisch ausgebildet sind, sodass der Anschlagkörper 8 mit seinem Eingreifhaken 25, die Drehung des Feststellelementes 7 in Öffnungsrichtung etwas hemmt (Vergleiche Fig. 16). Zum Öffnen des Feststellmechanismus muss der Fahrer einen etwas erhöhten Anfangskraftaufwand in die Handhabe einbringen, was ihm zusätzlich eine erhöhte Sicherheit des Feststellsystems vermittelt.

Mit Vorzug sind die Handhabe und die daran ausgebildeten Steuerflächen, sowie allfällige Dämpfer aus Kunststoff ausgebildet, sodass die gesamte Einrichtung einstückig in einem Spritzgusszyklus hergestellt werden kann.

## Patentansprüche

1. Lenksäule für ein Kraftfahrzeug mit einer Manteleinheit (1), in der eine Lenkspindel (2) um deren Lenkspindellängsachse (3) drehbar gelagert ist, und einer, an dem Kraftfahrzeug fixierten oder fixierbaren Konsoleneinheit (4), wobei die Manteleinheit (1) in oder an der Konsoleneinheit (4) in zumindest einer Richtung (5, 6) parallel und/oder quer zur Lenkspindellängsachse (3) verstellbar gehalten und von einem Feststellmechanismus in voneinander verschiedenen Positionen feststellbar ist und der Feststellmechanismus zumindest ein bewegbar, vorzugsweise verdrehbar, gelagertes Feststellelement (7) aufweist, wobei die Manteleinheit (1) in zumindest einer Verriegelungsstellung des Feststellelementes (7) in ihrer Position in oder an der Konsoleneinheit (4) festgestellt ist und in zumindest einer Freigabestellung des Feststellelementes (7) die Manteleinheit (1) relativ zur Konsoleneinheit (4) in zumindest einer der Richtungen parallel und/oder quer zur Lenkspindellängsachse (3) verstellbar ist, wobei dass die Lenksäule zumindest einen bewegbar gelagerten und mit dem Feststellelement (7) direkt oder indirekt zusammenwirkenden Anschlagkörper (8) aufweist, welcher in der Freigabestellung des Feststellelementes (7) in einer ersten Stellung angeordnet ist, in der er die Verstellbarkeit der Manteleinheit (1) relativ zur Konsoleneinheit (4) in zumindest einer der Richtungen (5, 6) parallel und/oder quer zur Lenkspindellängsachse (3) begrenzt, und in der Verriegelungsstellung des Feststellelementes (7) in zumindest einer zweiten Stellung angeordnet ist, in der er außer Eingriff mit der Manteleinheit (1) steht und der Anschlagkörper (8) in zumindest einer, vorzugsweise in zwei einander entgegengesetzten, Bewegungsrichtung(en) (15) des Anschlagkörpers (8), vorzugsweise jeweils, über zumindest eine, vorzugsweise zwei, Steuerfläche(n) (17, 18) geführt ist, wobei die Steuerfläche(n) (17, 18) am Feststellelement (7) oder einem mit dem Feststellelement (7) in der Bewegungsrichtung des Feststellelements (7), mit der das Feststellelement zwischen der Freigabestellung und der Verriegelungsstellung verstellbar ist, gekoppelten Element angeordnet ist (sind) und das Feststellelement (7) um eine Feststellelementschwenkachse (14) drehbar gelagert ist, **dadurch gekennzeichnet, dass** die Steuerfläche (17, 18) oder die Steuerflächen (17, 18) eine die Feststellelementschwenkachse (14) zumindest abschnittsweise spiralförmig umgebende Form aufweist bzw. aufweisen.

2. Lenksäule nach Anspruch 1, **dadurch gekennzeichnet, dass** die Lenksäule zumindest einen Gegenanschlagkörper (9, 10), vorzugsweise zumindest zwei Gegenanschlagkörper (9, 10), aufweist, wobei der Anschlagkörper (8) in der Freigabestellung des Feststellelementes (7) zur Begrenzung der Verstellbarkeit der Manteleinheit (1) relativ zur Konsoleneinheit (4) in zumindest einer der Richtungen (5, 6) parallel und/oder quer zur Lenkspindellängsachse (3) mit dem Gegenanschlagkörper (9, 10), vorzugsweise mit den Gegenanschlagkörpern (9, 10), zusammenwirkt.

3. Lenksäule nach Anspruch 2, **dadurch gekennzeichnet, dass** der Anschlagkörper (8) direkt oder indirekt in oder an der Konsoleneinheit (4) bewegbar gelagert ist und der oder die Gegenanschlagkörper (9, 10) direkt oder indirekt in oder an der Manteleinheit (1) angeordnet ist oder sind.

4. Lenksäule nach Anspruch 2 oder 3, **dadurch gekennzeichnet, dass** der Anschlagkörper (8) in seiner Lage, in Richtung der Verstellbarkeit der Manteleinheit (1) relativ zur Konsoleneinheit (4) gesehen, in oder an der Konsoleneinheit (4) fixiert ist und der oder die Gegenanschlagkörper (9, 10) in seiner bzw. ihrer Lage, in Richtung der Verstellbarkeit der Manteleinheit (1) relativ zur Konsoleneinheit (4) gesehen, in oder an der Manteleinheit (1) fixiert ist oder sind.

5. Lenksäule nach einem der Ansprüche 2 bis 4, **dadurch gekennzeichnet, dass** der oder die Gegenanschlagkörper (9, 10) eine von Seitenwänden(11) begrenzte und kanalförmige Ausnehmung (12), vorzugsweise ein Langloch, in Richtung, vorzugsweise in einander entgegen gesetzten Richtungen, der Verstellbarkeit der Manteleinheit (1) relativ zur Konsoleneinheit (4) begrenzt oder begrenzen und der Anschlagkörper (8) in der Freigabestellung des Feststellelementes (7) in die kanalförmige Ausnehmung (12) eingreift.

6. Lenksäule nach Anspruch 5, **dadurch gekennzeichnet, dass** die kanalförmige Ausnehmung (12). vorzugsweise das Langloch, direkt oder indirekt in oder an der Manteleineinheit (1) angeordnet ist.

7. Lenksäule nach einem der vorhergehenden Ansprüche, **dadurch gekennzeichnet, dass** das Feststellelement (7) ein um die Feststellelementschwenkachse (14) schwenkbares Element, vorzugsweise ein von Hand betätigbarer Hebel oder ein elektrisch angetriebenes Rotationselement, ist.

8. Lenksäule nach einem der vorhergehenden Ansprüche, **dadurch gekennzeichnet, dass** der Anschlagkörper (8) zumindest bereichsweise als Stift ausgebildet und/oder, vorzugsweise linear, verschiebbar, direkt oder indirekt, in oder an der Konsoleneinheit (4) gelagert ist.

9. Lenksäule nach einem der Ansprüche 1 bis 8, **dadurch gekennzeichnet, dass** die zwei Steuerflächen (17, 18) eine Nut (19), vorzugsweise im oder am Feststellelement (7), begrenzen und der Anschlagkörper (8) zur Zwangskoppelung mit dem Feststellelement (7), vorzugsweise permanent, in die Nut (19) eingreift.

10. Lenksäule nach einem der vorhergehenden Ansprüche , **dadurch gekennzeichnet, dass** der Anschlagkörper (8) mittels einer Feder (20) federbelastet ist, wobei die Federbelastung den Anschlagkörper (8), vorzugsweise permanent, gegen die Steuerfläche (18) drückt.

11. Verfahren zum Betrieb einer Lenksäule nach einem der Ansprüche 1 bis 10,**dadurch gekennzeichnet, dass** in der Freigabestellung des Feststellelementes (7) die Verstellbarkeit der Manteleinheit (1) relativ zur Konsoleneinheit (4) in zumindest einer der Richtungen (5, 6) parallel und/oder quer zur Lenkspindellängsachse (3) von dem Anschlagkörper (8) begrenzt wird und der Anschlagkörper (8) in der Verriegelungsstellung des Feststellelementes (7) außer Eingriff mit der Manteleinheit (1) angeordnet wird.

## Claims

1. Steering column for a motor vehicle having a jacket unit (1), in which a steering spindle (2) is mounted rotatably about its steering spindle longitudinal axis (3), and a bracket unit (4) fixed or fixable on the motor vehicle, wherein the jacket unit (1) is held in or on the bracket unit (4) displaceably in at least one direction (5, 6) parallel and/or transversely to the steering spindle longitudinal axis (3) and is securable by a securing mechanism in positions different from one another and the securing mechanism comprises at least one movably, preferably rotatably, mounted securing element (7), wherein the jacket unit (1) is secured, in at least one locked position of the securing element (7), in its position in or on the bracket unit (4) and, in at least one release position of the securing element (7), the jacket unit (1) is displaceable relative to the bracket unit (4) in at least one of the directions parallel and/or transversely to the steering spindle longitudinal axis (3), wherein the steering column comprises at least one movably mounted stop body (8) cooperating directly or indirectly with the securing element (7), which stop body, in the release position of the securing element (7), is arranged in a first position in which it delimits the displaceability of the jacket unit (1) relative to the bracket unit (4) in at least one of the directions (5, 6) parallel and/o r transversely to the steering spindle longitudinal axis (3) and, in the locked position of the securing element (7), is arranged in at least one second position in which it is disengaged from the jacket unit (1) and the stop body (8) is guided in at least one, preferably in two mutually opposite, movement directions (15) of the stop body (8), preferably in each case, over at least one, preferably two, control facets) (17, 18), the control facets) (17, 18) being arranged on the securing element (7) or on an element coupled to the securing element (7) in the movement direction of the securing element (7) with which the securing element is displaceable between the release position and the locked position and the securing element (7) is mounted rotatably about a securing element swivel axis (14), **characterised in that** the control face (17, 18) or the control faces (17, 18) has or have a form at least partially spirally surrounding the securing element swivel axis (14).

2. Steering column according to Claim 1, **characterised in that** the steering column comprises at least one counterstop body (9, 10), preferably at least two counter-stop bodies (9, 10), the stop body (8), in the release position of the securing element (7) for delimitating the adjustability of the jacket unit (1) relative to the bracket unit (4) in at least one of the directions (5, 6) parallel and/or transversely to the steering spindle longitudinal axis (3), cooperating with the counter-stop body (9, 10), preferably with the counter-stop bodies (9, 10).

3. Steering column according to Claim 2, **characterised in that** the stop body (8) is movably mounted directly or indirectly in or on the bracket unit (4) and the counter-stop body or bodies (9, 10) is or are arranged directly or indirectly in or on the jacket unit (1).

4. Steering column according to Claim 2 or 3, **characterised in that** the stop body (8) is fixed in its position, viewed in the direction of the displaceability of the jacket unit (1) relative to the bracket unit (4), in or on the bracket unit (4) and the counter-stop body or bodies (9, 10) is or are fixed in its or their position, viewed in the direction of the displaceability of the jacket unit (1) relative to the bracket unit (4), in or on the jacket unit (1).

5. Steering column according to one of Claims 2 to 4, **characterised in that** the counter-stop body or bodies (9, 10) delimits or delimit a channel-like cutout (12), preferably an elongated hole, delimited by side walls (11), in the direction, preferably in mutually opposite directions, of the displaceability of the jacket unit (1) relative to the bracket unit (4), and the stop body (8) in the release position of the securing element (7) engages in the channel-like cutout (12).

6. Steering column according to Claim 5, **characterised in that** the channel-like cutout (12), preferably the elongated hole, is arranged directly or indirectly in or on the jacket unit (1).

7. Steering column according to one of the preceding claims, **characterised in that** the securing element (7) is an element swivellable about the securing element swivel axis (14), preferably a manually actuatable lever or an electrically driven rotation element.

8. Steering column according to one of the preceding claims, **characterised in that** the stop body (8) is at least regionally formed as a pin and/or mounted, preferably linearly, displaceably, directly or indirectly, in or on the bracket unit (4).

9. Steering column according to one of Claims 1 to 8, **characterised in that** the two control faces (17, 18) delimit a groove (19), preferably in or on the securing element (7), and the stop body (8) engages, preferably permanently, in the groove (19) for positive coupling with the securing element (7).

10. Steering column according to one of the preceding claims, **characterised in that** the stop body (8) is spring-loaded by means of a spring (20), the spring loading pressing the stop body (8), preferably permanently, against the control face (18)

11. Method for operating a steering column according to one of Claims 1 to 10, **characterised in that**, in the release position of the securing element (7), the displaceability of the jacket unit (1) relative to the bracket unit (4) in at least one of the directions (5, 6) parallel and/or transversely to the steering spindle longitudinal axis (3) is delimited by the stop body (8) and, in the locked position of the securing element (7), the stop body (8) is arranged disengaged from the jacket unit (1).

## Revendications

1. Colonne de direction pour un véhicule automobile comprenant une unité enveloppe (1), dans laquelle est logé un arbre de direction (2) de manière à pouvoir tourner autour de son axe longitudinal d'arbre de direction (3), et comprenant une unité console (4) fixée ou pouvant être fixée au niveau du véhicule automobile, l'unité enveloppe (1) étant maintenue dans ou au niveau de l'unité console (4) de manière à pouvoir être déplacée dans au moins une direction (5, 6), de manière parallèle et/ou de manière transversale par rapport à l'axe longitudinal d'arbre de direction (3) et pouvant être bloquée par un mécanisme de blocage dans des positions différentes les unes des autres, le mécanisme de blocage présentant au moins un élément de blocage (7) logé de manière mobile, de préférence de manière à pouvoir être pivoté, l'unité enveloppe (1) étant bloquée, lorsque l'élément de blocage (7) se trouve dans au moins une position de verrouillage, dans sa position, dans ou au niveau de l'unité console (4), et lorsque l'élément de blocage (7) se trouve dans au moins une position débloquée, l'unité enveloppe (1) pouvant être déplacée, par rapport à l'unité console (4), dans au moins une des directions, de manière parallèle et/ou de manière transversale par rapport à l'axe longitudinal d'arbre de direction (3), la colonne de direction présentant au moins un corps de butée (8) logé de manière mobile et coopérant directement ou indirectement avec l'élément de blocage (7), lequel est disposé, lorsque l'élément de blocage (7) se trouve dans la position débloquée, dans une première position, dans laquelle il délimite la mobilité de l'unité enveloppe (1) par rapport à l'unité console (4) dans au moins une des directions (5, 6) de manière parallèle et/ou de manière transversale par rapport à l'axe longitudinal d'arbre de direction (3), et qui est disposé, lorsque l'élément de blocage (7) se trouve dans la position verrouillée, dans au moins une deuxième position, dans laquelle il ne se trouve pas en prise avec l'unité enveloppe (1) et le corps de butée (8) est guidé dans au moins une, de préférence dans deux directions de déplacement (15) opposées du corps de butée (8), de préférence respectivement par l'intermédiaire d'une, de préférence de deux surfaces de commande (17, 18), la ou les surfaces de commande (17, 18) étant disposées au niveau de l'élément de blocage (7) ou au niveau d'un élément couplé à l'élément de blocage (7) dans la direction de déplacement de l'élément de blocage (7), laquelle permet de déplacer l'élément de blocage entre la position débloquée et la position de verrouillage et l'élément de blocage (7) est logé de manière à pouvoir tourner autour d'un axe de pivotement d'élément de blocage (14), **caractérisé en ce que** la surface de commande (17, 18) ou les surfaces de commande (17, 18) présente ou présentent un moule entourant l'axe de pivotement d'élément de blocage (14) au moins par endroits de manière à présenter une forme de spirale.

2. Colonne de direction selon la revendication 1, **caractérisée en ce que** la colonne de direction présente au moins un corps de butée complémentaire (9, 10), de préférence au moins deux corps de butée complémentaires (9, 10), le corps de butée (8) coopérant, lorsque l'élément de blocage (7) se trouve dans la position débloquée, aux fins de la limitation de la mobilité de l'unité enveloppe (1) par rapport à l'unité console (4), dans au moins une des directions (5, 6) de manière parallèle et/ou de manière transversale par rapport à l'axe longitudinal d'arbre de direction (3), avec le corps de butée complémentaire (9, 10), de préférence avec les corps de butée complémentaires (9, 10).

3. Colonne de direction selon la revendication 2, **caractérisée en ce que** le corps de butée (8) est logé de manière mobile directement ou indirectement dans ou au niveau de l'unité console (4), et **en ce que** le ou les corps de butée complémentaires (9, 10) sont disposés directement ou indirectement dans ou au niveau de l'unité enveloppe (1).

4. Colonne de direction selon la revendication 2 ou 3, **caractérisée en ce que** le corps de butée (8) est fixé dans sa position, vu en direction de la mobilité de l'unité enveloppe (1) par rapport à l'unité console (4), dans ou au niveau de l'unité console (4), et **en ce que** le ou les corps de butée complémentaires (9, 10) sont fixés, dans leur position, vu en direction de la mobilité de l'unité enveloppe (1) par rapport à l'unité console (4), dans ou au niveau de l'unité enveloppe (1).

5. Colonne de direction selon l'une quelconque des revendications 2 à 4, **caractérisée en ce que** le ou les corps de butée complémentaires (9, 10) délimitent un évidement (12) délimité par des parois latérales (11) et présentant une forme de canal, de préférence un trou oblong, en direction, de préférence dans des directions opposées les unes aux autres, de la mobilité de l'unité enveloppe (1) par rapport à l'unité console (4), et **en ce que** le corps de butée (8) vient en prise, lorsque l'élément de blocage (7) se trouve dans la position débloquée, avec l'évidement (12) présentant une forme de canal.

6. Colonne de direction selon la revendication 5, **caractérisée en ce que** l'évidement (12) présentant une forme de canal, de préférence le trou oblong, est disposé directement ou indirectement dans ou au niveau de l'unité enveloppe (1).

7. Colonne de direction selon l'une quelconque des revendications précédentes, **caractérisée en ce que** l'élément de blocage (7) est un élément pouvant pivoter autour de l'axe de pivotement d'élément de blocage (14), de préférence est un levier actionnable manuellement ou un élément de rotation à entraînement électrique.

8. Colonne de direction selon l'une quelconque des revendications précédentes, **caractérisée en ce que** le corps de butée (8) est réalisé au moins par endroits sous la forme d'une tige, et/ou est logé directement ou indirectement, de manière à pouvoir être coulissé, de préférence de manière linéaire, dans ou au niveau de l'unité console (4).

9. Colonne de direction selon l'une quelconque des revendications 1 à 8, **caractérisée en ce qu'**au moins deux surfaces de commande (17, 18) délimitent une rainure (19), de préférence dans ou au niveau de l'élément de blocage (7), et **en ce que** le corps de butée (8) vient en prise avec la rainure (19), de préférence de manière permanente, aux fins du couplage forcé avec l'élément de blocage (7).

10. Colonne de direction selon l'une quelconque des revendications précédentes, **caractérisée en ce que** le corps de butée (8) est soumis à l'action d'un ressort par un ressort (20), l'action exercée par le ressort pressant le corps de butée (8), de préférence de manière permanente, contre la surface de commande (18).

11. Procédé servant à faire fonctionner une colonne de direction selon l'une quelconque des revendications 1 à 10, **caractérisé en ce que** la mobilité de l'unité enveloppe (1) est limitée, lorsque l'élément de blocage (7) se trouve dans la position débloquée, par le corps de butée (8) par rapport à l'unité console (4) dans au moins une des directions (5, 6) de manière parallèle et/ou de manière transversale par rapport à l'axe longitudinal d'arbre de direction (3), et **en ce que** le corps de butée (8) ne se trouve pas en prise avec l'unité enveloppe (1) lorsque l'élément de blocage (7) se trouve dans la position de verrouillage.
